# EUROPÄISCHE PATENTSCHRIFT

(11) **EP 1 359 341 B1**
(45) Veröffentlichungstag und Bekanntmachung des Hinweises auf die Patenterteilung: **08.02.2006**
(21) Anmeldenummer: 02015827.5
(22) Anmeldetag: 16.07.2002
(51) Int. Cl.: F16F 6/00

(54) **Magnetische Federeinrichtung mit negativer Steifheit**
Magnetic spring device with negative stiffness
Dispositif de ressort magnétique à rigidité négative

(30) Priorität: 03.05.2002 DE 10220008
(43) Veröffentlichungstag der Anmeldung: 05.11.2003
(73) Patentinhaber: Integrated Dynamics Engineering GmbH, 65479 Raunheim (DE)
(72) Erfinder: Heiland, Peter, 65479 Raunheim (DE); Hartgers, Han, 6512 DS Einhoven (NL)
(74) Vertreter: Herden, Andreas F.

(56) Entgegenhaltungen:
- EP-A- 0 767 321
- WO-A-99/17034
- FR-A- 1 302 481
- PATENT ABSTRACTS OF JAPAN Bd. 2002, Nr. 08, 5. August 2002 (2002-08-05) -& JP 2002 115742 A (TOSHIBA CORP), 19. April 2002 (2002-04-19)
- PATENT ABSTRACTS OF JAPAN Bd. 2000, Nr. 15, 6. April 2001 (2001-04-06) & JP 2000 346129 A (TOKIN CORP), 12. Dezember 2000 (2000-12-12)

## Beschreibung

Die Erfindung betrifft eine Magnetische Federeinrichtung mit negativer Steifheit gemäß den Merkmalen des Anspruchs 1 und eine Schwingungsisolationseinrichtung nach den Merkmalen des Anspruchs 32.

Es sind magnetische Federn bekannt, die eine negative Steifheit aufweisen.

Negative Steifheit bedeutet insoweit, dass die von der Feder auf einen Federkörper ausgeübte Kraft im vektoriellen Sinne, ausgehend von der Ruhelage, in Richtung der Bewegung des Federkörpers zunimmt, d.h. dass der Geschwindigkeitsvektor des Federkörpers parallel zum Federkraftvektor liegt, wohingegen im Fall von positiver Steifheit der Geschwindigkeitsvektor antiparallel zum Federkraftvektor ausgerichtet ist.

Eine Feder mit negativer Steifheit ist beispielsweise der EP 0 127 741 B2 zu entnehmen. Darin wird ein Federsystem eines Kraftfahrzeugs beschrieben, bei dem eine Kombination aus einer magnetischen Feder mit negativer und einer konventionellen Feder mit positiver Steifheit einsetzt wird. Das Federsystem soll in einem Kraftfahrzeug zwischen dem ungefederten und dem gefederten Massenteilen eingebaut bzw. eingeschaltet werden.

Der Aufbau der dort als Korrekturfeder bezeichneten magnetischen Feder zeichnet sich durch ein System bestehend aus zwei Stapeln von hintereinander geschalteten Permanentmagneten aus, die durch Weicheisenstücken voneinander getrennt liegen, wobei einer der Magnetstapel in Federrichtung beweglich angeordnet ist und wobei im Nullpunkt der Feder die Magnetstapeln so einander gegenüber stehen, dass gleichnamige Pole in Nachbarschaft zueinander zum Liegen kommen.

Das Prinzip der Korrekturfeder, mit dem oben dargestellten vergleichsweise komplizierten Aufbau beruht darauf, dass in Bezug auf die spezielle Verwendung der Feder im Federsystem eines Automobils im Arbeitspunkt des Federsystems und entsprechend dem Nulldurchgang der Korrekturfeder eine konzentrierte Abstoßung in Richtung der Verschiebung erzeugt werden soll, um auf diese Weise eine hohe negative Steifheit der Korrekturfeder zu erzielen, welche in Verbindung mit einer entsprechend steifen und damit mit kurzen Federwegen ausgestatteten positiven Feder zu einem weichen Abfedern führen soll.

Da die Funktion der Feder auf der abstoßenden Wirkung gleichnamiger Pole basiert, können bereits aus kleinste Änderungen in Abstand und Lage-der Magnete zueinander große Variationen hinsichtlich der Stabilität und Eigenschaften der Feder herrühren. Dies hat jedoch zur Folge und den Nachteil, dass die in der EP 0 127 741 B2 offenbarte Feder nur für bestimmte Zwecke, eingesetzt werden kann, und zwar insbesondere nur dort, wo keine all zu präzise Ausregelung der Federsteifheit oder anderer Parameter der Feder notwendig ist. Nicht verwendbar oder nur sehr eingeschränkt einsetzbar sind solche Federn, daher insbesondere zum Beispiel in sogenannten Vibrationsschwingungsisolationssystemen zur Schwingungsisolation von vibrationsempfindlichen Geräten wie beispielsweise Mikroskopen.

Aus der DD-A-28186 ist ebenfalls eine magnetische Feder mit negativer Steifheit zu entnehmen, welche in einem Kraftfahrzeugfedersystem einzubauen ist. Im Gegensatz zur EP 0 127 741 B2 beruht die negative Steifheit der Feder nach diesem Stand der Technik allerdings nicht auf die abstoßende, sondern auf die anziehende Wirkung magnetischer Pole.

Hierzu wird nach der DD-A-28186 ein magnetisierbarer Anker aus Weicheisen mit vier gleichmäßig beabstandeten Vorsprüngen innerhalb eines Rings bewegt, an dessen Innenseite alternierend in Polarität vier magnetische Pole angebracht sind, die in Größe und Lage den Vorsprüngen spiegelbildlich entsprechen. Die Anordnung ist nur im Zusammenhang mit der beabsichtigten Wirkung zu verstehen, nämlich ein Federsystem zu schaffen, welches in seiner progressiven Wirkung während des Federvorgangs zwar zunächst zu einer Reduktion der Federsteifheit führt, jedoch ab einer bestimmten Auslenkung aus der Nulllage die Steifheit, d.h. die positive Steifheit, des Federsystems sogar noch vergrößert.

Um dies zu bewerkstelligen befinden sich in der Ausgangslage des System die Vorsprünge des Ankers genau zwischen zwei Polen und nehmen so eine labile Position gegenüber den Magneten ein. Beim Federvorgang wird der Anker aus dieser Position gedreht, so dass sich die Vorsprünge zu den Pole hin bewegen und von diesen angezogen werden. Die dabei bewirkte negative Steifheit kehrt sich jedoch in dem Augenblick um, in dem die Vorsprünge die Position der Pole erreicht haben, denn von da ab bedarf es einer zusätzlichen Kraft, um die von den Magneten angezogenen Vorsprünge aus dem Kraftfeld der Pole wieder in die Ausgangslage zu verdrehen. Auf diese Weise wird, um den Arbeitspunkt des Federsystems herum, die ursprünglich lineare verlaufende Kennlinie der zur magnetischen Feder parallel geschalteten Schraubenfeder, in eine progressiv verlaufende Federkennlinie umgeformt.

Der ausschließlich nicht-lineare Charakter der Feder zeigt sich jedoch nicht nur aus dem Übergang zwischen positiver und negativer Steifheit, sondern auch darin, dass die auf die Vorsprünge des Ankers wirkende magnetische Kraft nicht linear, sondern aufgrund der Drehung mit Zunahme des Überlappungsvolumens zwischen den Polen und den Ankervorsprüngen überproportional zunimmt.

Speziell das generell nicht-lineare Verhalten der Feder, schränkt die Einsatzmöglichkeiten der Feder sehr stark ein und macht sie, insbesondere ungeeignet für die Anwendung in anderen Schwingungsisolationssystemen.

In der JP 2002 115714 A, welche als nächsliegender Stand der Technik angesehen wird, ist ein variabler Federdämpfer beschrieben, welcher eine Reihenanordnung von Magneten an einem stationären Teil, welches an einem zu dämpfenden Objekt montiert ist, und eine Reihenanordnung von Magneten an einem beweglichen Teil, welche auf einer beweglichen Masse und über einen Spalt der Reihenanordnung von Magneten des stationären Teils gegenüberliegend angeordnet ist, aufweist. Weiterhin weist der variable Federdämpfer ein magnetisches Federelement auf, welches als magnetische Rückstellkraft wirkt, wenn die Magnet-Reihenanordnung an dem beweglichen Teil und die Magnet-Reihenanordnung an dem stationären Teil relativ zueinander parallel entlang der Magnetoberfläche bewegt werden, wobei dabei die Breite des Spaltes bewahrt wird.

Aufgabe der Erfindung ist es daher eine Federeinrichtung und/oder eine Feder mit negativer Kennlinie bereitzustellen, welche insbesondere flexibel einsetzbar ist, einen einfachen Aufbau aufweist, gezielt einstellbar ist und dabei das Einstellen einer linearen Kennlinie ermöglicht.

Gelöst wird diese Aufgabe durch eine Federeinrichtung gemäß den Merkmalen des Anspruchs 1. Ferner wird im Anspruch 32 eine Schwingungsisolationeinrichtung definiert bei der die erfindungsgemäße Federeinrichtung zum Einsatz kommt.

Nach einzelnen Merkmalen der Erfindung wird eine magnetische Federeinrichtung mit negativer Steifheit bereitgestellt, die wenigstens eine erste Polkörperkombination aus wenigstens einem ersten, wenigstens einem zweiten und wenigstens einem dritten Polkörper beinhaltet, die jeweils entgegengesetzte magnetische Pole aufweisen, wobei die Polkörper in der Kombination so ausgerichtet sind, dass ungleichnamige Pole einander gegenüberstehen und der erste und der dritte Polkörper zueinander einen definierten Abstand einnehmen, in welchem der zweite Polkörper angeordnet ist, wobei die Polkörper relativ zueinander bewegbar angeordnet sind.

Die erfindungsgemäße Anordnung von Polkörpern in der Federeinrichtung ermöglicht erstmals die kontrollierte Steuerung des magnetischen Streufelds oder Feldgradienten zwischen den Polkörpern und insbesondere an den Rändern der Polkörper bzw. der Pole, welches gemäß der Maxwell-Gleichungen für die magnetische Kraftwirkung auf die Polkörper verantwortlich ist. Denn der Erfinder konnte nachweisen, dass auf der Basis der erfindungsgemäßen Polkörperkombination ein gezieltes Einstellen des Feldgradienten möglich ist, wobei hierbei der Feldgradient linearisierbar ist und damit eine im wesentlichen konstante negative Steifheit der magnetischen Federeinrichtung erzielt werden kann, wobei der Abstand zwischen dem ersten und dem dritten Polkörper bzw. Pol auf einem bestimmten Wert konstant gehalten wird.

Vorteilhafte Weiterbildungen finden sich in den Unteransprüchen.

Dabei ist erfindungsgemäß vorgesehen wenigstens zwei Überlappungsvolumina zwischen den Polen auszubilden, wobei durch ein Verschieben des zweiten Polkörpers relativ zu den übrigen Polkörpern, eine Vergrößerung des einen Überlappungsvolumens eine Verkleinerung des anderen Überlappungsvolumens zur Folge hat. Die funktionale Abhängigkeit der Volumengröße des einen Überlappungsvolumens von dem des anderen Überlappungsvolumens bietet die vorteilhafte Möglichkeit die Linearität der erfindungsgemäßen Federeinrichtung gegenüber den vorbekannten magnetischen Federn mit negativer Steifheit deutlich zu verbessern. Denn durch ein derart positiv ausgestaltetes System kann die Kraftwirkung des zweiten Polkörpers bzw. Pols auf den ersten Polkörper und dem dritten Polkörper durch die anziehende Kraft des anderen Pols der zweiten Vorrichtung in definierter Weise zumindest teilweise kompensiert und auf das verbleibende Streufeld reduziert werden.

Erfindungsgemäß ist ferner vorgesehen, dass die Summe der Überlappungsvolumina konstant bleibt. In diesem Fall ändert sich das insgesamt vorhandene Überlappungsvolumen auch dann nicht, wenn die zweite Vorrichtung relativ zur ersten Vorrichtung verschoben wird. Dies hat zur Folge, dass innerhalb der Federeinrichtung oder des Federkörpers der magnetische Widerstand im wesentlichen konstant bleibt und deshalb die magnetische Induktion und die magnetische Feldstärke sich im wesentlichen nicht ändern, so dass die Kraftwirkung auf die zweite Vorrichtung im wesentlichen alleine durch die sich ändernden Volumina an den Rändern der Überlappungsvolumina bedingt ist, was letztlich zu einem verbesserten linearen Verhalten des erfindungsgemäßen Federkörpers führt. In diesem Zusammenhang steht auch, dass nach der Erfindung mit Vorteil vorgesehen ist, dass sich die Polkörper vorzugsweise relativ so zueinander bewegen, dass die Pole der Polkörper im wesentlichen entlang von aus den Polen austretenden Feldlinien verschoben werden.

Der Verlauf der Feldlinien und damit der Streufelder wird maßgeblich durch die Polgeometrien beeinflusst. Zur Definition der Streufelder kommen nach der Erfindung für die Polkörper verschiedenste Geometrien in Betracht. Beispielhaft sei in diesem Zusammenhang auf kreisförmige und/oder ringförmige und/oder rechteckige und/oder quadratische und/oder entsprechendem Querschnitt verwiesen. Besonders vorteilhaft können Polkörper sein, die zwar womöglich die gleich Art von Querschnitt aufweisen, jedoch unterschiedliche Größen besitzen. Denn es wurde im Rahmen der Erfindung erkannt, dass der Feldgradient besonders effektive eingestellt oder manipuliert werden kann, wenn die Querschnittsgröße des jeweils ersten und dritten Polkörpers gegenüber der des zweiten Polkörpers variiert wird. Als besonders vorteilhaft haben sich dabei Querschnittsverhältnisse zwischen den besagten Polkörpern, d.h. zwischen den jeweils ersten und dritten Polkörpern und den jeweils zweiten Polkörpern ergeben, die in einem Bereich zwischen 100% und 300%, d.h. zwischen 1:1 und 3:1, liegen. Als besonders bevorzugt ist der Bereich zwischen 130% und 200% hervorzuheben, wobei gemäß einer bevorzugten Ausführungsform das Verhältnis bei 140% liegt.

Mit Vorteil umfasst erfindungsgemäß, insbesondere zum flexiblen Einstellen einer definierten Federsteifheit, die erfindungsgemäße Federeinrichtung neben der ersten Polkörperkombination eine zweite oder weitere Polkörperkombinationen, wobei die magnetische Flussrichtung durch die Polkörperkombinationen parallel und/oder antiparallel zueinander verlaufen, wobei nach einer bevorzugten Ausführungsform die magnetische Flussrichtung durch die Polkörperkominationen parallel zueinander verlaufen und gemäß einer weiteren besonders bevorzugten Weiterbildung der Erfindung die magnetische Flussrichtung benachbarter Polkörperkominationen antiparallel zueinander verlaufen. Dabei weist die erste der Ausführungsform den weiteren Vorteil auf, dass mit ihr besonders gezielt eine bestimmte Federsteifheit einstellbar ist und die zweite beschriebene Ausführungsform bietet den Vorteil, dass mit ihr auf sehr einfache Art und Weise Federeinrichtungen mit vergleichsweiser harter Steifheit hergestellt bzw. kombiniert werden können.

Überraschenderweise ist es für die Polkörper bzw. Pole des erfindungsgemäßen Federeinrichtung bzw. Basiszelle ausreichend, wenn diese aus einer Kombination von Magneten und/oder magnetisierbaren Körpern gebildet werden, bei der zumindest zwei Pole durch ein oder mehrere Magnete bereitgestellt werden. Die Erfindung bietet daher ferner den Vorteil, dass nur ein Minimum an Magneten mit dauerhaften Polen zum Einsatz kommen müssen, was zu einer Reduktion der Herstellungskosten der erfindungsgemäßen Federeinrichtung führen kann. Darüber hinaus hat dies den Vorteil, dass eine solche Polkörperkombination weniger oder gar nicht empfindlich gegenüber horizontal Verschiebungen, d.h. Verschiebungen senkrecht zur Bewegungsrichtung der Polkörper, zwischen den magnetischen Polen ist.

In weiterer vorteilhafter Weiterbildung der erfindungsgemäßen umfasst die erfindungsgemäße Federeinrichtung wenigstens ein Joch zum Erzeugen eines gebündelten magnetischen Kreises zwischen den Polkörpern. Hierbei sind die Polkörper, d.h. insbesondere die äußeren Polkörper in Form des ersten und des dritten Polkörpers, mit dem oder den Joche so verbunden bzw. an diesem oder diesen befestigt, dass ein geschlossener magnetischer Feldfluss entsteht.

Höchst vorteilhaft ist die erfindungsgemäße Federeinrichtung auch in Bezug auf die bei den Polkörpern einzusetzenden Magnete flexibel. Dies bedeutet, dass sowohl Permanentmagnete als auch Elektromagnete oder eine Kombination daraus zum Einsatz kommen können.

Für die Polkörper und/oder das Joch bzw. die Joche kommen je nach Anwendungszweck, d.h. insbesondere in Bezug auf die Härte der Feder, sowohl ferroelektrisch magnetisch weiche Stoffe als auch paramagnetische Stoffe in Betracht, d.h. Stoffe deren relative Permeabilität µᵣ mindestens 1 ist. Hierzu bieten sich insbesondere Eisen und/oder Eisenlegierungen und/oder Keramiken und/oder Nicht-Eisen-Metalle und/oder entsprechende Legierungen an.

Im Sinne einer weiteren vorteilhaften Weiterbildung der erfindungsgemäßen Federeinrichtung ist der Abstand zwischen dem ersten und dem dritten Polkörper, d.h. der Abstand zwischen den äußeren Polkörpern, einstellbar. Dies macht es nach der Erfindung höchst vorteilhaft möglich die Steifheit der Feder flexibel einzustellen, wobei die Federeinrichtung gleichfalls auf den oder die Abstände abgestimmt werden kann, in denen die Federeinrichtung eine konstante Steifheit bzw. einen linearen Kraftverlauf besitzt. Zu diesem Zweck umfasst die erfindungsgemäße Federeinrichtung ein Richtmittel, mit dem eine präzise Einstellung des besagten Polkörperabstands im Milimeterbereich oder darunter möglich ist. Als bevorzugte Abstandswerte zwischen den Polkörpern haben sich im Rahmen der Erfindung Werte zwischen 23mm und 33mm herausgestellt. Zur Erzeugung einer konstanten Steifheit wurde besonders bevorzugt der Abstand auf den Wert 28mm eingestellt.

Teil der erfindungsgemäßen Federeinrichtung ist mit Vorteil auch eine geeignetes Haltemittel, mit dem der zweite Polkörper bzw. mittelere Polkörper beweglich im Abstand zwischen den äußeren Polkörpern bzw. dem ersten und dem dritten Polkörper gehalten werden kann. Das Haltemittel ist vorzugsweise aus einem nicht magnetischen oder nicht magnetisierbaren Material.

Um eine im wesentlichen geradlinige Führung des mittleren Polkörpers (zweiten Polkörpers) im Abstand zu ermöglichen, sind in der Federeinrichtung nach der Erfindung Führungsmittel vorgesehen, welche Abweichungen von einer geradlinigen Bewegung im wesentlichen verhindern. Hierzu weist das Führungsmittel Federmittel mit positiver Steifheit auf, welche den zweiten Polkörper im Abstand zwischen den äußeren Polkörpern bzw. dem ersten und dem dritten Polkörper halten und in Form eines Federparallelogramms angeordnet sind. Als geeignetes Federmittel können beispielsweise Blattfedern, die ein Parallelogramm bilden, eingesetzt werden.

Nach einer weiteren vorteilhaften Weiterbildung der Erfindung ist die Federeinrichtung mit einem Kopplungsmittel ausgestattet. Das Kopplungsmittel dient vorzugsweise zum An- und Entkoppeln der Federeinrichtung an eine Last oder einem Isolationskörper und ist steif oder starr in der Schwingungsisolationsrichtung und flexible senkrecht dazu. Das Kopplungsmittel ist hierzu zweigeteilt und die Entkopplung erfolgt vorzugsweise durch einen Federdraht, der parallel zur Schwingungsisolationsrichung im Kopplungsmittel angeordnet ist und beide Teile des Kopplungsmittels verbindet.

Darüber hinaus umfasst die Federeinrichtung vorteilhafter Weise eine Klammereinrichtung, die vorzugsweise am Kopplungsmittel befestigt ist und mit der die Federeinrichtung an eine Last oder dergleichen befestigt werden kann.

Mit Vorteil umfasst die erfindungsgemäße Federeinrichtung mögliche zusätzliche Abschirmmittel, um sicherzustellen, dass das in der Federeinrichtung erzeugte Magnetfeld nicht nach außen dringt.

Ein weiterer Vorteil der Erfindung ist auch darin zu sehen, dass die erfindungsgemäße Federeinrichtung mit ihrer Polkombination hinsichtlich der Verwendung keine Vorzugsrichtung im Raum hat. Das heißt, dass die Bewegungsrichtung der Polkörper in alle Raumrichtungen ausrichtbar ist. Denn falls ein Ausgleich gravitativer Kräfte zum Erzielen einer konstanten Federwirkung in alle Raumrichtungen erfolgen soll, so kann dies durch ein definiertes Einstellen der Polabstände bewirkt werden. Wobei letzteres nach der Erfindung grundsätzlich sowohl manuell als auch via Steuer- und/oder Regelung erfolgen kann.

Mit Vorteil können in der erfindungsgemäßen Federeinrichtung selbstverständlich nicht nur eine Polkörperkombination enthalten sein, sondern eine Reihe von parallel und/oder in Serie geschalteter Kombinationen, die je nach Anforderungsprofil so miteinander verkoppelt werden, dass sie variabel zuschaltbar oder kombinierbar sind, um verschiedene Federhärten einzustellen zu können.

Im Zusammenhang mit einer weiteren höchst vorteilhaften Ausführungsform des Erfindungsgegenstands umfasst die erfindungsgemäße Federeinrichtung auch eine geeignete Steuer- und Regeleinrichtung. Mit der Steuereinrichtung ist es möglich auf sämtliche Stellgrößen der Federeinrichtung oder des Federkörpers zu beeinflussen. Einflussgrößen sind zum Beispiel der Abstand zwischen den Polen, die Stärke der Magnetfelder, durch zum Beispiel Hinzuschalten einer Spule oder durch das Vergrößern des Spulenstroms, oder durch ein Hinzuschalten einer weiteren Polkörperkombination, wodurch unter anderem die Relativposition der Pole insgesamt und/oder die Relativgeschwindigkeit und/oder die Relativbeschleunigung zwischen den Polen im Federvorgang steuerbar ist.

Zur Komplettierung der Federeinrichtung kann diese zusätzlich einen Federkörper mit positiver Steifheit zur Schwingungsisolation umfassen. Hierbei können wahlweise, mechanische und/oder pneumatische und/oder hydraulische und/oder elektromechanische Federn zum Einsatz kommen.

Die Erfindung bezieht sich allerdings nicht nur auf eine Federeinrichtung sondern gleichfalls auch auf eine Schwingungsisolationseinrichtung zur passiven und/oder dynamischen Schwingungsisolation eines Isolationskörpers oder einer Last, insbesondere zur Vibrationsschwingungsisolation, und insbesondere zur Schwingungsisolation schwingungssensibler Vorrichtungen, wie z.B. Mikroskope und entsprechende Instrumente, bei denen eine erfindungsgemäße Federeinrichtung, so wie sie oben geschildert wurde, zum Einsatz kommt. In diesem Zusammenhang hat die Federeinrichtung vorzugsweise ihre natürliche Lage zwischen der Last und einer Standfläche. Andere Ausrichtungen kommen selbstverständlich auch in Betracht.

Die Erfindung wird nachfolgend anhand mehrerer Figuren im einzelnen beschrieben. Hierbei beziehen sich in den einzelnen Zeichnungen gleiche Bezugszeichen auf dieselben oder entsprechende Merkmale.

Es zeigen:
- Fig. 1: ein Diagramm, welches die Kraft-Weg-Abhängigkeit zweier sich anziehenden Pole darstellt,
- Fig. 2: eine schematische Darstellung einer erfindungsgemäßen Federeinrichtung,
- Fig. 3: den Verlauf der magnetischen Feldlinien der Federeinrichtung nach Figur 2,
- Fig. 4: ein Diagramm, welches die negative Steifheit in Abhängigkeit vom Relativabstand des mittleren Polkörpers zu den Polen der äußeren Polkörper nach Fig. 2 oder 3 darstellt,
- Fig. 5: den Federkraftverlauf für die jeweiligen Polkörperabstände h aus Fig. 4
- Fig. 6: insgesamt vier Graphen, die die Abhängigkeit der Steifheit für verschiedene Querschnittsverhältnisse zwischen den äußeren und den inneren Polkörpern wiedergeben.
- Fig. 7: eine Polkörperkombination nach einer möglichen Ausführungsform der erfindungsgemäßen Federeinrichtung.
- Fig. 8: eine weitere Polkörperkombination der erfindungsgemäßen Federeinrichtung.
- Fig. 9: eine schematische Darstellungen einer Ausführungsführungforrn mit entgegengesetzten magnetischen Flussrichtungen im Sinne von Figur 8.
- Fig. 10: ein Querschnitt der technischen Umsetzung der Ausführungsform nach Fig. 9.
- Fig. 11: ein weiterer Querschnitt der technischen Umsetzung der Ausführungsform nach Fig. 9.
- Fig. 12: eine dreidimensionale Darstellung der Ausführungsform nach Fig 9, 10 und 11.
- Fig. 13: eine weiter dreidimensionale Darstellung der Ausführungsform nach Fig 9, 10 und 11.
- Fig. 14: eine schematische Darstellung einer zweite Ausführungsform der Erfindung, bei der ein Polkörper ein Weicheisenteil umfasst.
- Fig. 15: ein Querschnitt der technischen Umsetzung der Ausführungsform nach Fig. 14.

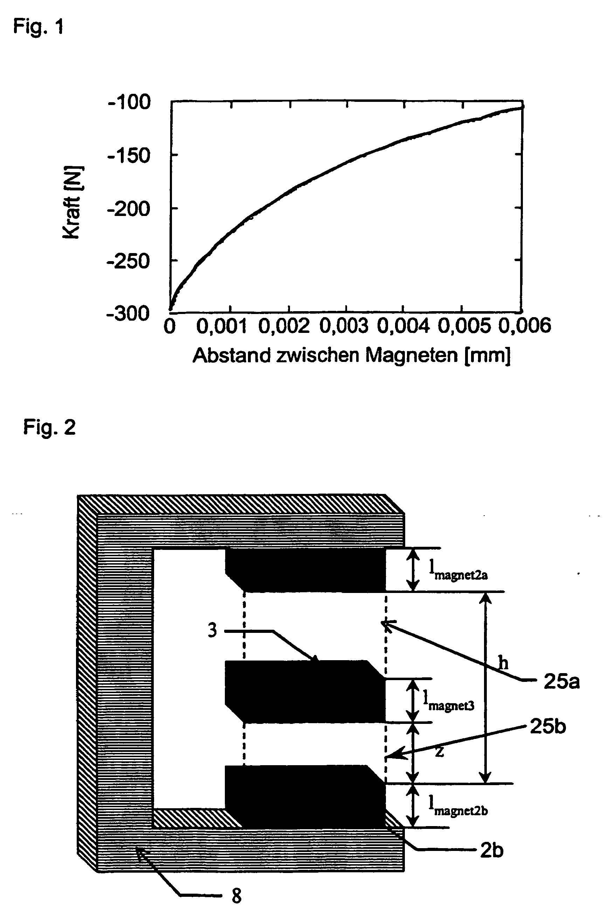

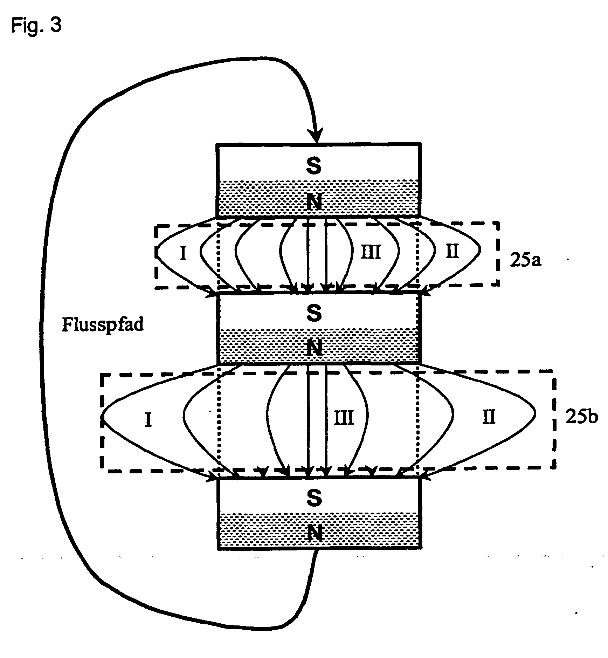

Aus Fig. 1 ist eine Kennlinie zu entnehmen, welche den Anstieg der Anziehungskraft zwischen zwei sich anziehenden Magneten in Abhängigkeit vom Abstand zwischen den Magneten wiedergibt. Grundsätzlich ist der Abstand zwischen den Magnetpolen dann der alleinig maßgebliche Parameter, wenn die Magneten in Bezug auf Geometrie und Material eine definierte Struktur aufweisen. Wie dem Fachmann bekannt ist ziehen sich Magnetpole verschiedener Polarität gegenseitig an und wie auch aus Fig. 1 deutlich zu entnehmen ist nimmt die Anziehungskraft mit abnehmendem Abstand nicht linear zu.

Aufgrund der Zunahme der Kraft in Bewegungsrichtung verspüren die Magneten bei ihrer Relativbewegung eine negative Steifheit. Der nicht lineare Kraftanstieg zwischen zwei Magneten nach Fig. 1, kann z.B. dadurch ausgeglichen werden, dass auf einem der Magneten eine Kraftwirkung ausgeübt wird, die der Anziehungskraft zwischen den Magneten entgegen wirkt. Hierauf wird im Folgenden noch genauer einzugehen sein.

Aus Fig. 2 ist eine Kombination von magnetischen und/oder magnetisierbaren Polkörpern 2a, 2b, 3 im Sinne der Erfindung zu entnehmen, die eine Linearisierung der Anziehungskräfte zwischen den Polen der Magnetkörper 2a, 2b, 3 möglich machen. Der magnetischen Kreis besteht aus vier Grundelementen. Zum einen weist der Kreis einen Spalt 25 auf, der in der Regel mit Luft befüllt ist und manchmal auch eine Flüssigkeit beinhalten kann, welche wie Luft im allgemeinen ein Permeabilität von µᵣ ≈ 1 besitzt. Ferner weist der magnetische Kreis ein Weicheisenjoch 8 auf. Das Joch ist zur Fokussierung der magnetischen Feldlinien im magnetischen Kreis. Es besteht vorzugsweise aus einem ferro- oder ferrimagnetischen Material mit hoher Permeabilität (µᵣ ≈ 1000), wodurch eine optimale Bündelung der magnetischen Feldlinien erzielbar ist. Daneben beinhaltet der magnetische Kreis drei Permanentmagnete 2a, 2b, 3 mit großer Koerzetiv-Kraft oder zwei magnetische Spulen, zur Erzeugung eines Magnetfeldes, wobei zur Erzeugung des erfindungsgemäß notwendigen Magnetfelds zumindest zwei der angeführten Permanentmagnete notwendig sind.

Aus Figur 3 ist der Verlauf der magnetischen Feldlinien der Anordnung nach Figur 2 zu entnehmen. Es ist dort der Feldlinienverlauf im Spalt 25a (oberen Spalt) und im Spalt 25b (unterer Spalt) inklusive des Streuflusses an den Rändern I, II der Spalte 25a und 25b dargestellt. Aus der Figur ist ferner zu entnehmen, dass wenn der Magnet oder Polkörper 3 in bezug auf die übrigen Polkörper bewegt wird das Volumen bzw. Überlappungsvolumen 25a-III in dem Maße zunimmt, wie das Überlappungvolumen 25b-III abnimmt, so dass das gesamte Volumen aus beiden Überlappungvolumina konstant bleibt. Im Gegensatz hierzu ändern sich die Volumina I und II nicht linear mit der Lage des mittleren Polkörpers 3, so dass hierbei die mittlere magnetische Induktion nicht mehr länger konstant ist. Im Ergebnis bedeutet dies, dass sich insbesondere aufgrund dieser Nicht-Linearität die magnetische Energie mit der relativen Lage des Polkörpers 2 gegenüber den Polkörpern 2a, 2b ändert, wodurch eine anziehende Kraft auf die Polkörper entsteht. Dies bedeutet, dass die Änderung des magnetischen Feldgradienten in den Spalten 25a und 25b eine oder die wesentliche Ursache für die negative Steifheit der erfindungsgemäßen Federeinrichtungsanordnung ist. Es sei in diesem Zusammenhang noch erwähnt, dass die Nicht-Linearität des erfindungsgemäßen magnetischen Kreises nicht ausschließlich mit dem dargestellten Phänomen erklärt werden kann, sondern insbesondere auch der parasitäre magnetische Fluss durch das Joch 8 einen Teil dazu beiträgt.

Beeinflussen lässt sich der Feldgradient oder Streufluss insbesondere zum einen durch den Abstand h der Pole 2a und 2b und durch die Geometrie bzw. Querschnitte derselben. Bei geeigneter Abstimmung der erwähnten Parameter ist es möglich die magnetische Feldstärke im erfindungsgemäßen magnetischen Kreis zu linearisieren, dabei werden in der Regel die Querschnitte der Polkörper unterschiedlich groß sein.

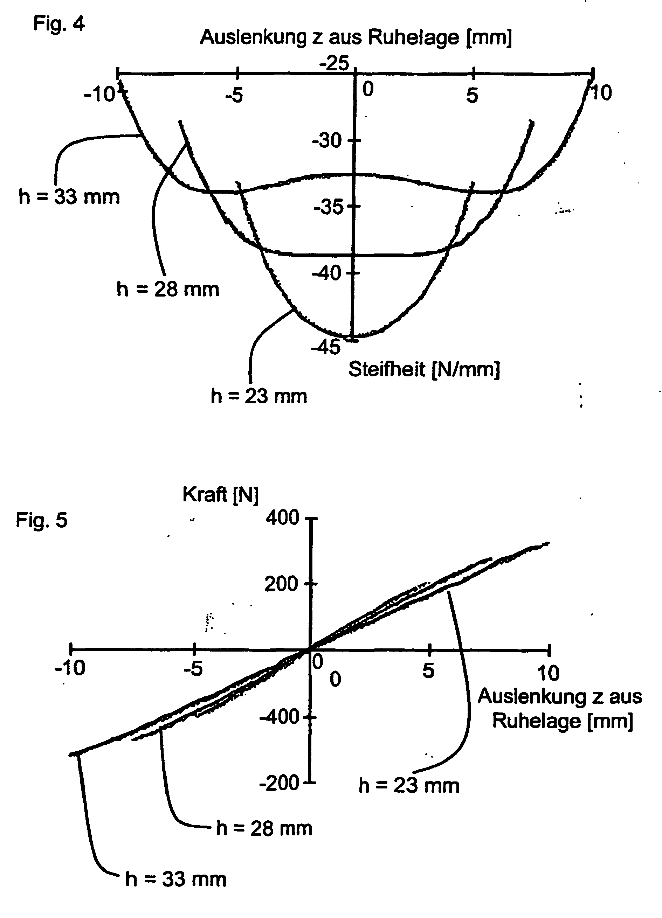

An Hand der Figuren 4 und 5 ist der Einfluss zu erkennen, welcher eine Änderung des Abstandes h zwischen dem oberen Polkörper 2a und dem unter Polkörper 2b auf die Linearität des erfindungsgemäße Federeinrichtung hat. Figur 4 zeigt die Abhängigkeit der Steifheit von der Position z des mittleren Polkörpers gemäß Fig. 2 oder 3 in bezug auf die äußeren Polkörper 2a und 2b, ausgehen von der Ruhelage in der Mitte (z = h/2) zwischen den äußeren Polkörper 2a und 2b, in der sich die anziehenden Kräfte gegenseitig aufheben. Deutlich ist hierbei zu erkennen, dass die Steifheit der Federeinrichtung für einen Abstandswert h = 28 mm in einem Bereich von ca. ± 2,5mm im wesentliche konstant verläuft. Gleiches lässt sich für den benannten Bereich für die Abstandswerte h = 33mm oder 23mm nicht mehr sagen, da bei diesen Abständen deutliche Nicht-Linearitäten in Form von Kurvenkrümmungen zu erkennen sind.

Aus Figur 5 sind die zu Figur 4 entsprechenden Federkraftverläufe für die jeweiligen Polkörperabstände zu entnehmen. Fig. 5 zeigt demnach ein Diagramm, welches die Federkraftwirkung auf den Körper 3 nach Fig. 2 in Abhängigkeit vom Abstand z zu den Polen der Körper 2a und 2b veranschaulicht. Wie anhand der Kurven nach Fig. 5 zu erkennen ist, kann insbesondere beim besagten Abstand von h = 28mm mit der erfindungsgemäßen Federeinrichtung eine im wesentlichen lineare Kraftwirkung auf den magnetischen Körper 2 in einem relativ weiten Bereich erzielt werden.

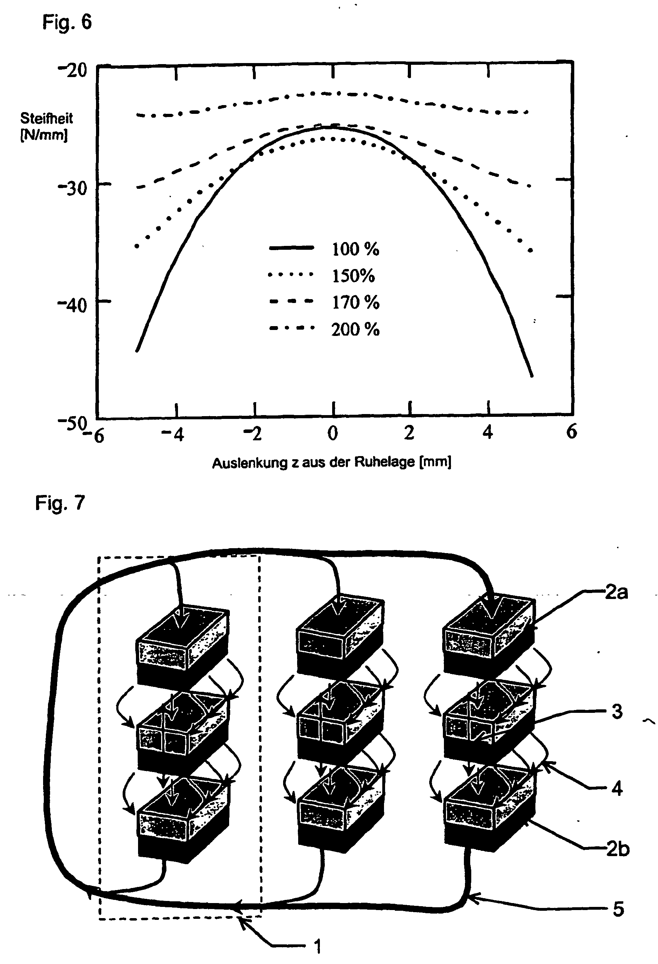

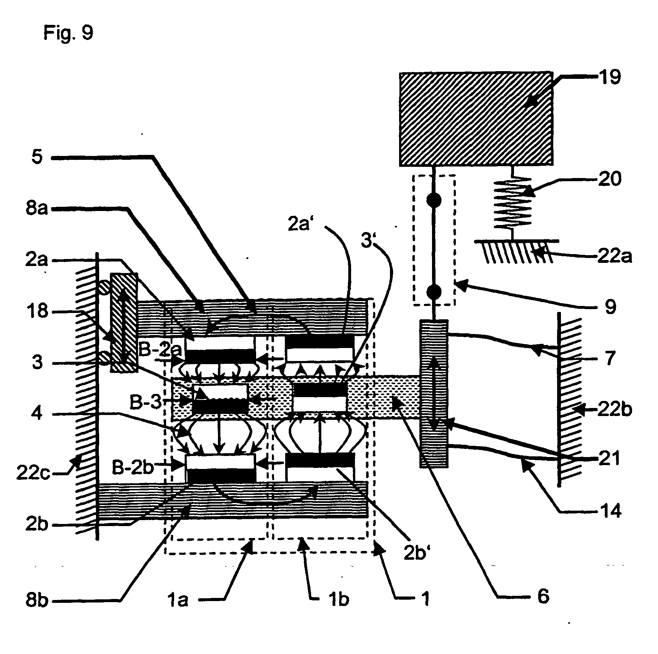

Figur 6 zeigt insgesamt vier Graphen, die die Abhängigkeit der Steifheit von der Auslenkung des zweiten Polkörpers 3 (Fign. 3, 4, 9) aus der Ruhelage oder Arbeitslage (Gleichgewichtslage) in bezug auf die äußeren Polkörper 2a und 2b wiedergeben, wobei sich die einzelnen Graphen auf für verschiedene Breiten- bzw. Querschnittsverhältnisse zwischen dem mittleren Polkörper 3 und den äußeren Polkörpern 2a und 2b (Fig. 9) beziehen. Die durchgezogene Kurve (Verhältnis: 100%) entspricht einem Breitenverhältnis, bei dem die Breiten B-2a, B-2b und B-3 (Fig. 9) der Polkörper 2a, 2b, 3 (Fig. 9) gleich sind. Das Verhältnis 150% bezieht sich darauf, dass die äußeren Polkörper 2a, 2b jeweils einen um das 1,5fache vergrößerte Breite gegenüber dem mittleren Polkörper 3 aufweisen. Entsprechendes gilt für die Verhältnisse 170% (1,7fach) und 200% (2fach). Aus der Graphik nach Figur 6 ergibt sich, dass je größer das Verhältnis zwischen den Polkörpern ist, um so konstanter wird die negative Steifheit über den gesamten Bereich der Auslenkung und desto geringer ist der absolute Wert für die negative Steifheit. Ferner gilt es darauf hinzuweisen, dass der Kurvenverlauf der Graphen nach Figur 6 auch vom Abstand h (Fig. 2) der äußeren Magneten 2a, 2b abhängt. Im Ergebnis bedeutet dies, dass bei dem Optimieren der Steifheit sowohl der Abstand zwischen den äußeren Magneten als auch die Breite der Polkörper zu berücksichtigen ist. Die Kurvenverläufe nach Figur 6 wurden auf der Basis der Ausführungsform nach Fig. 9 modellhaft (siehe unten) gewonnen. Dabei hat der zweite oder mittlere Magnet 3 die Abmessungen 10x10x30mm, d.h. eine Breite B-3 von 10mm, eine Länge l_{magn3} von 10mm und eine Tiefe von 35mm und die jeweils äußeren Magneten Abmessungen mit einer Breite B-2a/b zwischen 10 und 17mm und einer Länge l_{magn2a/b} von 7mm und eine Tiefe von 35mm. Der nominale Abstand h zwischen den äußeren Magneten 2a und 2b wurde auf 24mm festgelegt und der Abstand zwischen den Dreierkominationen aus jeweils drei Magneten wurde auf 6mm festgelegt.

Aus den oben dargestellten Erkenntnissen im Zusammenhang mit der Erfindung ergibt sich insbesondere, dass kleine Polkörper, bei denen die äußeren Polkörper 2a, 2b bis zu dreimal so groß sind wie die inneren Polkörper 3, in bezug auf Linearität und Steifheit günstigere Eigenschaften vorliegen als diese bei einem großen Polkörper mit der gleich Magnetflussdichte der Fall wäre, so dass insbesondere auch die Kombination von Polkörpern im Rahmen der Erfindung eine große Rolle spielt.

Im Zusammenhang mit der erfindungsgemäßen Federeinrichtung und insbesondere im Zusammenhang mit der Ausführungsform nach Fig. 2 besteht nicht nur die Möglichkeit Permanentmagnete und/oder Elektromagnete einzusetzen, sondern bei den Kombinationsmöglichkeiten auch magnetisierbare Körper aus zum Beispiel Weicheisen, bis hin zu paramagnetischen Stoffen einzusetzen. Aus der nachfolgenden Tabelle sind verschiedene Kombinationsmöglichkeiten für den Fall angegeben, bei dem maximal 4 Pole bereitgestellt werden. Federeinrichtungen mit mehr als vier Polen z. B. in Form einer Reihenschaltung des Systems nach Fig. 2 liegen selbstverständlich auch im Rahmen der Erfindung.

| Nr. | Polkörper 2a | Polkörper 3 | Polkörper 2b | Anmerkungen |
|---|---|---|---|---|
| 1 | Magnet | Magnet | Magnet | Die drei Magnete weisen eine einheitliche Magnetisierungsrichtung auf. Der Körper 3 kann aus 2 voneinander unabhängigen Magneten bestehen. |
| 2 | Magnet | Weicheisen | Magnet | |
| 3 | Weicheisen | Magnet | Weicheisen | |
| 4 | Weicheisen | Magnet | Magnet | Die zwei Magnete 3 und 2b weisen die gleiche Magnetisierungsrichtung auf. |
| 5 | Magnet | Magnet | Weicheisen | Die zwei Magnete 2a und 3 weisen die gleiche Magnetisierungsrichtung auf. |
| 6 | Magnet | Weicheisen und Magnet | Magnet oder Weicheisen | Der Weicheisenpolkörpers K2 muss auf die Magnete der Körper 3 und 2b ausgerichtet sein. Alle Magnete müssen die gleiche Magnetisierungsrichtung aufweisen. |
| 7 | Magnet oder Weicheisen | Magnet und Weicheisen | Magnet | Der Weicheisenpolkörper 3 muss auf die Magnete der Körper 2a und 2b ausgerichtet sein. Alle Magnete weisen die gleiche Magnetisierungsrichtung auf. |

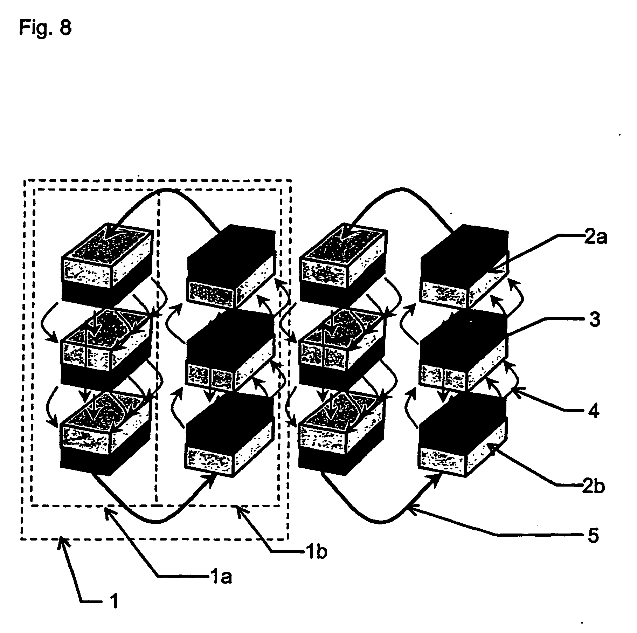

Aus den Figuren 7 und 8 sind zwei Arten von Polkörperkombinationen zu entnehmen, mit denen die Leistungsfähigkeit der erfindungsgemäßen Federeinrichtung individuell eingestellt werden kann.

In Figur 7 ist eine Set von Polkörper dargestellt, das insgesamt drei parallel nebeneinander angeordnete magnetische Basiszellen 1 umfasst, wobei jede Basiszelle jeweils drei Polkörper 2a, 2b, 3 beinhaltet. Die Magnetisierung der parallel liegenden Basiszellen zeigt jeweils in die gleiche Richtung, d.h. die Magnetisierungsrichtungen 4 liegen parallel zueinander. Der durch ein Joch zu führende magnetische Fluss 5 speist sich aus allen drei Basiszellen. Aufgrund der verhältnismäßig kleinen Basiszelle 1 ist es bei dieser Ausführungsform auf einfach Art und Weise möglich, das Polkörper-Set gezielt durch das Hinzufügen weiterer Basiszellen zu erweitern, um zur gewünschten Steifheit für die erfindungsgemäße Federeinrichtung zu gelangen.

Bei der in Figur 8 gezeigten Ausführungsvariante beinhaltet eine Basiszelle 1 insgesamt 6 Polkörper, wobei die Basiszelle 1 Subzellen 1a und 1b aufweist, die in ihrer Polkörperkombination der Basiszelle nach Figur 7 gleichen. Die magnetischen Subzellen sind so zueinander angeordnet, dass die Magnetisierzungsrichtungen 4 der jeweiligen Subzellen antiparallel zueinander verlaufen. Der durch ein Joch zu führende magnetische Fluss 5 speist sich, bei dieser Ausführungsform, aus den magnetischen Feldlinien, welche den jeweils äußeren Polkörpern oder Magneten 2a, 2b einer Subzelle entspringen und in die benachbarte Subzelle der Basiszelle 1 einmünden, so dass die jeweils äußeren Polkörper 2a, 2b der jeweiligen Subzellen 1a und 1b über ein Joch miteinander verbunden sind. Von Vorteil ist bei diesem Ausführungsbeispiel der Erfindung insbesondere, dass zwischen den Subzellen 1a, 1b der magnetische Flusspfad vergleichsweise klein ist. Ferner können mit dies Konfiguration auf sehr einfache Art und Weise hohe Steifheiten erzielt werden.

Selbstverständlich können die Ausführungsvarianten nach Figur 7 und 8 auch miteinander kombiniert werden, um zu einer gewünschten negativen Federsteifheit zu gelangen.

Aus Fig. 9 ist eine Weiterbildung einer erfindungsgemäßen Federeinrichtung auf der Grundlage des Einsatzes einer Basiszelle nach Figur 8 zu entnehmen. Verwendet werden hierzu insgesamt sechs Permanentmagnete 2a, 2b, 3, 2a', 2b', 3', die in Stapeln von jeweils drei Permanentmagneten für jede Subzelle 1a und 1b nebeneinander angeordnet sind. Die jeweilige Kombination 1a und 1b aus jeweils drei übereinander liegenden Permanentmagneten, bei denen ungleichnamige Pole einander gegenüberliegen, weisen entgegengesetzte Magnetisierungsrichtungen auf. Die Magnete 2a, 2b, 3, 2a', 2b', 3' sind zylinderförmig, wobei der Querschnitt der Magnete 3 und 3' kleiner ist als der äußeren Magnete 2a, 2b, 2a', 2b'.

Im vorliegenden Ausführungsbeispiel nach Figur 9 dient die erfindungsgemäße Federeinrichtung zur Korrektur der Feder 20 derart, dass die Last 19 keine oder deutliche weniger Federsteifheit wahrnimmt.

Die unteren Magneten 2b, 2b' sind an dem unteren magnetischen Joch 8b befestigt. Das Joch 8b leitet die Flusslinien 5 von der Subzelle 1a zur Subzelle 1b und ist mit der Befestigungswand 22c fest verbunden. Beide oberen Magneten 2a, 2a' sind am Joch 8a befestigt. Das Joch 8a leitet ebenfalls die Flusslinien 5 von der Subzelle 1b zur Subzelle 1a. Das Joch 8a ist allerdings nicht unmittelbar an der Besfestigungswand 22c befestigt, sondern ist über einem Richtapparat 18 mit der Befestigungswand 22c verbunden. Mit dem Richtapparat ist es möglich den Abstand zwischen dem Joch 8a und dem Joch 8b zu verändern und damit auch den Abstand zwischen den Magneten 2a, 2a' und 2b, 2b', um so die magnetische Steifheit einzustellen.

Die Magnet 3, 3' in der Mitte zwischen den äußeren Magneten 2a, 2a' und 2b, 2b' sind fest mit einem beweglichen nichtmagnetischen Halter 6 verbunden. Dieser Magnetträger kann vermittels des Führungsmittels 21 sich auf und ab bewegen. Gemäß der vorliegenden Ausführungsform umfasst das Führungsmittel 21 eine elastisch ausgebildete geradlinig führende und in Form eines Parallelogramms ausgebildete Leitvorrichtung 21. Diese Leitvorrichtung besteht aus zwei Blattfedern 7 und 14. Eine obere Blattfeder 7 und eine untere 14, die auf einer Seite mit der Befestigungswand 22b und auf der anderen Seite mit dem starren Körper 26 verbunden sind. Die Leitvorrichtung 21 verhindert im wesentlichen jegliche Horizontalbewegungen senkrecht zur Bewegungsrichtung der Magnete und im wesentlichen jegliche Kippbewegung. Die einzige im wesentlichen zugelassene Bewegung ist die Translationsbewegung in Richtung der angegebene Pfeile.

Die so geführten Magnete 3, 3' weisen, daher senkrecht zur Translationrichtung eine hohe Steifheit auf. Um die auf die Federeinrichtung nach Fig. 8 wirkenden horizontalen Kräfte und Verschiebungen von denen abzukoppeln, die auf die Last 19 einwirken, umfasst die Federeinrichtung nach Fig. 8 ein Entkopplungsmittel oder Entkopplungsglied 9. Das Entkopplungsglied verbindet die bewegliche Baueinheit der Federeinichtung bestehend aus den Magneten 3, 3', dem nichtmagnetischen Halter 6 und der Leitvorrichtung 21, mit der Last 19 derart, dass auf die Last eine.negative Steifheit wirkt.

Die negative Steifheit der Basiszelle 1 (Fig. 8) ist größer als die Steifheit der Leitvorrichtung und kompensiert, somit die Steifheit der Feder 20.

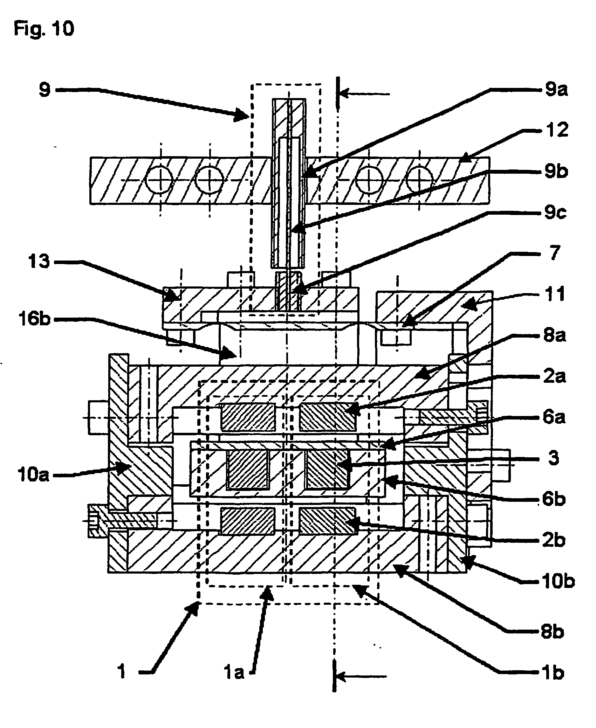

Die technische Realisierung der erfindungsgemäßen Federeinrichtung nach Fig. 9 ist den Figuren 10, 11, 12 und 13 dargestellt.

Figur 9 zeigt eine Querschnitt durch die technische Ausführungsform, die der Ansicht nach Fig. 8 entspricht. Sieht man von dem Entkopplungsglied 9 und der Verbindungsklammer 12 ab, passt die erfindungsgemäße Ausführungsform in eine Schachtel mit den Abmessungen 107x79x75mm (Breite x Länge x Tiefe). Die Abmessungen der äußeren Magneten 2a, 2b, 2a', 2b' sind 7x14x35mm (Breite(B) x Länge(1) x Tiefe) und die der mittleren Magneten 3, 3' sind 10x10x30mm (Breite x Tiefe x Höhe). D.h. das Breitenverhältnis beträgt das 143%. Bei den Magneten handelt es sich um GSN-40, Neodymium Magneten.

Die Steifheit der in Figur 9 dargestellten Federeinrichtung lässt sich in einem Bereich zwischen -16N/mm und -38N/mm einstellen.

Der Richtapparat zur Einstellung des Abstandes zwischen den Magneten 2a, 2a' und 2b, 2b' beinhaltet die gleitende Führung des oberen Jochs zwischen den seitlichen Platten 10a und 10b. Zu diesem Zweck sind die seitlichen Platten mit Schlitzöffnungen ausgestattet. Im unteren Joch 8b sind einige Bohrungen zur Befestigung des Jochs bzw. der Federeinrichtung eingebracht. Der Magnetträger 6 besteht in der vorliegenden Ausführungsform aus einer Magnetaufnahme 6b und einem Verschlussteil 6a. Diese umschließen den Magneten 3 vollständig. Der Magnetträger ist aus einem nichtmagnetischen Material gefertigt.

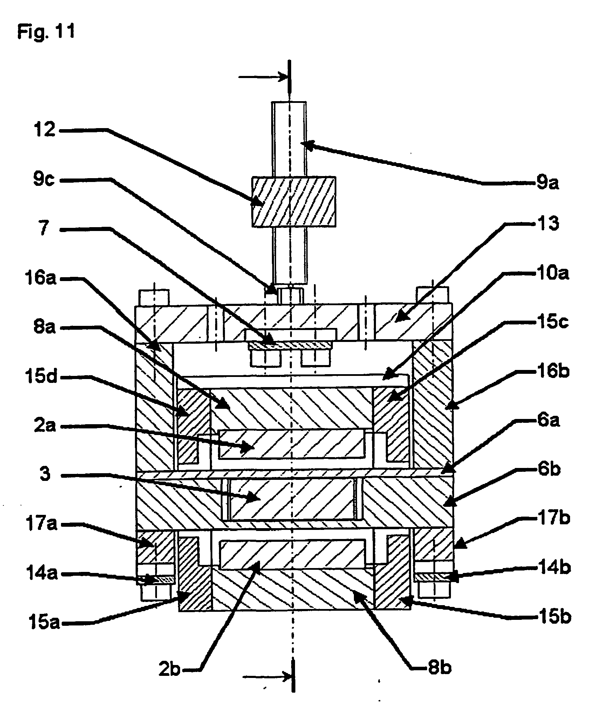

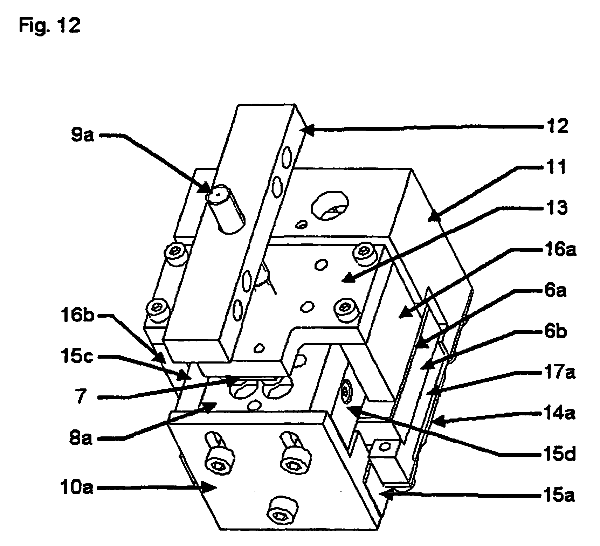

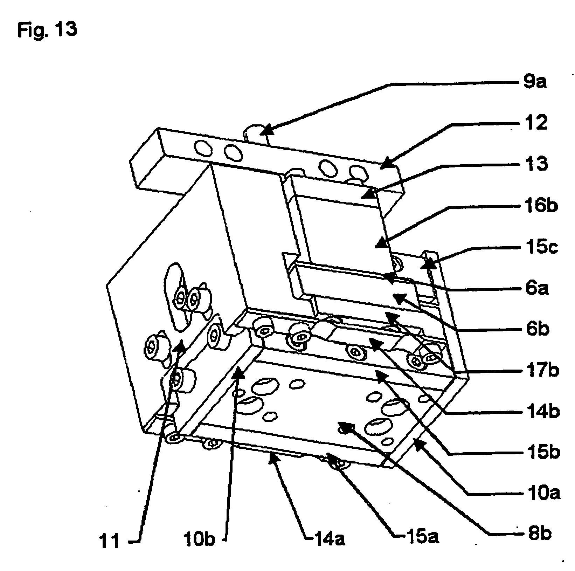

Die elastische Parallelführung 21 ist im Schnitt nach Figur 10 nur teilweise erkennbar. Dabei ist nur die obere Blattfeder 7 zu sehen. Die untere Blattfeder 14 ist in Figur 11 zu erkennen. Sie ist gespleißt und befindet sich an der Außenseite der Federeinrichtung. Die beiden gespleißten Teile der Blattfeder 14 sind in Figur 11 mit den Referenzziffern 15a und 15b gekennzeichnet. Noch besser zu erkennen ist die gespleißte Blattfeder 14 in den Außenansichten nach Figur 12 und 13 der Ausführungsform.

Der starre Körper 26 (Fig.9) wird in der Ausführungsvariante nach Figur 10 oder 11 durch die mit den Bezugsziffern 13, 16a, 16b, 6a, 6b, 17a und 17b gekennzeichneten Federeinrichtungsteile gebildet. Dabei ist an den Stellen 14a, 14b die untere Blattfeder 14 befestigt. Das andere Ende der Blattfedern hingegen ist mit der Abdeckung 11 verbunden. Dies entspricht der Befestigung an die Befestigungswand 22b im Zusammenhang mit Figur 9, denn die Abdeckung 11 ist ihrerseits wiederum mit der seitlichen Platte bzw. Befestigungswand 10b verbunden. Die Abdeckung kann über die Platte 10b etwas verschoben werden, um auf diese Weise ein Justieren des Springfederparallelogramms zu ermöglichen.

Das Entkopplungsmittel 9 besteht aus drei Teilen. Die Drahtfeder 9b ist eines der wichtigen Teile. Die Drahtfeder 9b ist mit einer Hülse 9a und mit dem Stecker 9c verbunden. Dabei wird die Entkopplung senkrecht zur Bewegungsrichtung der Polkörper durch die Biegefähigkeit der Drahtfeder 9b gewährleistet. Mit einem Schraubengewinde in der Hülse 9a kann die Höhe der Entkopplungseinheit 9 mit Bezug auf die Verbindungsklammer 12 eingestellt werden.

Um sicher zu stellen, dass die in der erfindungsgemäßen Federeinrichtung erzeugten Magnetfelder nicht nach außen dringen, ist die Federeinrichtung mit zusätzlichen Abschirmstreifen 15a, 15b, 15c und 15d versehen.

Aus der dreidimensionalen Ansicht nach Figur 13 der Ausführungsform nach Figur 9, 10 und 11 ist ferner auch der untere Teil der Federeinrichtung zu erkennen. Dort sieht man beispielsweise auch die Gewindebohrungen im unteren Joch 8b über die eine Befestigung der Federeinrichtung auf einfache Art und Weise erfolgen kann.

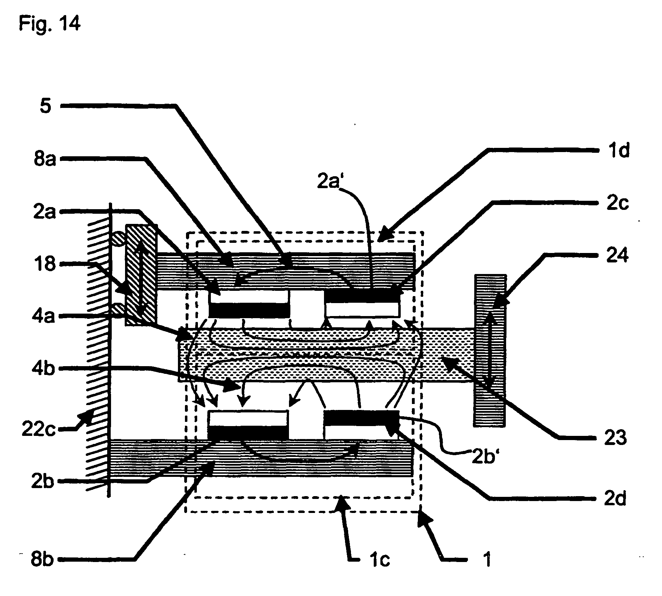

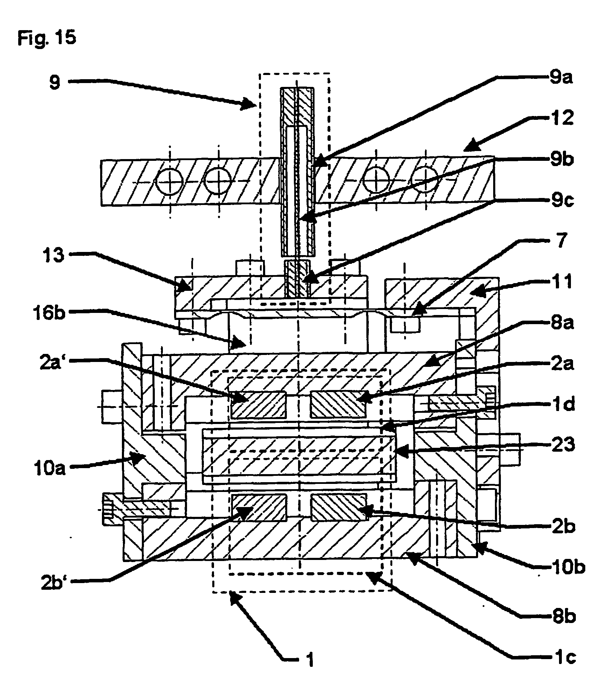

Aus den Figuren 14 und 15 ist eine weitere mögliche Ausführungsform nach der Erfindung zu entnehmen.

Dabei zeigt Figur 14 eine schematische Ansicht der weiteren Variante. Beim Ausführungsbeispiel nach Figur 14 wurden gegenüber der Ausführungsform nach.Figur 9 die beiden Magnete 3 und 3' und der nicht-magnetische Träger 6 durch das Weicheisenteil 23 ersetzt. Wie aus Figur 14 ersichtlich ändert sich hierdurch der Feldlinienverlauf zwischen den Magneten 2a, 2b und 2a' 2b' und dem Weicheisenteil 23. Die Feldlinien verlaufen nunmehr nicht mehr nur im wesentlichen vertikal, d.h. entlang der Bewegungsrichtung der Polkörperkombination, sondern im wesentlichen senkrecht zur Bewegungsrichtung, so dass die magnetischen Subzelle 1c und 1d der magnetischen Basiszelle 1 nicht mehr vertikal sondern horizontal orientiert sind.

In Figur 9 verlaufen die Feldlinien 4 vom oberen Magnet 2a zum mittleren Magnet 3 zum unteren Magnet 2b durch den Flusspfad 5 des unteren Jochs 8b und gelangen aufwärts durch die Magneten der Subzelle 1b, über den Flusspfad 5 im oberen Joch 8b wieder zurück zum oberen Magnet 2a. In der Anordnung nach Figur 14 gibt es zwei Hauptpfade.

Der erste Flusspfad 4a verläuft vom oberen Magnet 2a direkt durch das Weicheisenteil im mittleren Teil der Polkörperanordnung zum unteren Magnet 2b und weiter durch den Flusspfad 5 im unteren Joch 8b zum Magnet 2b' und von da aus hochwärts durch das Weicheisenteil 23 zum oberen Magnet 2a', durch das obere Joch 8a zurück zum oberen Magnet 2a.

Der zweite magnetische Flusspfad entspricht dem Pfad zwischen beiden oberen Magneten 2a und 2a' und den beiden unteren Magneten 2b und 2b'. Abhängig von der Dimension der Polkörperkombination, wird der zweite Flusspfad eine größere Bedeutung haben als der erste. Deshalb sind die Subzellen im nach diesem Ausführungsbeispiel stärker horizontal orientiert. Die Vorteile der Federeinrichtung nach Figur 14 sind insbesondere darin zu sehen, dass weniger Permanentmagnete verwendet werden müssen und die Herstellung der Federeinrichtung somit preiswerter ist. Ferner ist das System nach Figur 14 unempfindlich gegenüber horizontalen Bewegungen des Weicheisenteil 23 in der Mitte der Polkörperkombination. Denn, insbesondere wenn das Weicheisenteil vergleichsweise groß ist gegenüber den Magneten, wird sich das Feld zwischen den Magneten und dem Weicheisenteil nicht ändern und deshalb keine horizontale Kräfte erzeugt werden, wenn das Weicheisenteil eine Horizontalbewegung vollzieht. Aufgrund dessen bedarf es bei der Ausführungsform nach Figur 14 und 15 einer weniger steifen vertikalen Führung 24, des Weicheisenteils 23, so dass zum Beispiel, wenn die zu isolierende Last selbst eine gute Führung aufweist oder unempfindlich ist gegenüber horizontalen Kräften und Verschiebungen, das sich bewegende Weicheisenteil unmittelbar mit der Last verbunden werden kann, wobei keine horizontale Entkopplung notwendig ist.

Figur 15 zeigt eine praktische Umsetzung der erfindungsgemäßen Federeinrichtung nach Fig. 14 mit einem Weicheisenteil.

Der in Figur 15 dargestellte Querschnitt ist sehr ähnlich zum Querschnitt aus Figur 10. Der Unterschied besteht darin, dass die Magneten 3 und 3' und der Magnetträger 6 mit seinen Teilen 6a und 6b durch ein Weicheisenteil 23 ersetzt wurden.

Das Weicheisenteil ist zwischen den vier Magneten 2a, 2b und 2a', 2b' in vertikaler Richtung bewegbar eingebaut. Die obere magnetische Subzelle 1d umfasst die Magnete 2a und 2a', wobei der Magnet 2a in Abwärtsrichtung magnetisiert ist und der Magnet 2a' in Aufwärtsrichtung magnetisiert ist, und die unter magnetische Subzelle 1c die Magnete 1b und 1b'.
Insoweit wird auch auf Figur 9 verwiesen.

Die Konfiguration nach Figur 15 nutzt die beschriebene Toleranz des Weicheisenteils in horizontaler Richtung nicht aus. Das Teil 23 wird vielmehr durch eine elastische Parallelogrammführung, die zwei Blattfedern 7 und 14 bzw. 14a und 14b beinhaltet und ferner ein starres Teil umfasst, welches die Teile 13, 16a, 16b, 17a und 17b besteht, an einer horizontalen Bewegung gehindert. Aufgrund der starken horizontalen Steifheit der Federeinrichtung wird auch hier eine Entkopplungsglied 9 benötigt.

Der Vorteil einer Konfiguration der Federeinrichtung mit der elastischen Parallelogrammführung und mit dem Entkopplungsglied 9 ist der, dass keine zusätzliche Anforderungen an die Vertikalführung der Last gestellt werden müssen.

Bei der Schwingungsisolation eines Mikroskops oder einer anderen schwingungsempfindlichen Vorrichtung werden die erfindungsgemäßen Federeinrichtungen mit negativer Steifheit im Zusammenhang mit z.B. einer Luftfederung eingesetzt, wodurch es möglich ist die Eigenfrequenzen des Isolationssystems zu verringern, und wodurch eine effektive Verbesserung der Schwingungsisolation erzielt werden kann.

## Patentansprüche

1. Magnetische Federeinrichtung mit negativer Steifheit umfassend: wenigstens eine erste Polkörperkombination aus wenigstens einem ersten, wenigstens einem zweiten und wenigstens einem dritten Polkörper (2a, 2b, 3), die jeweils entgegengesetzte magnetische Pole aufweisen, wobei die Polkörper in der Kombination so ausgerichtet sind, dass ungleichnamige Pole einander gegenüberstehen und der erste und der dritte Polkörper (2a, 2b) zueinander einen definierten Abstand (h) einnehmen, in welchem der zweite Polkörper (3) angeordnet ist und sich wenigstens zwei Überlappungsvolumina (25a-III, 25b-III) zwischen den Polen ausbilden, wobei die Polkörper (2a, 2b, 3) relativ zueinander bewegbar angeordnet sind **dadurch gekennzeichnet, dass** der zweite Polkörper (3) in bezug auf die übrigen Polkörper (2a, 2b) derart bewegt wird, dass das eine Überlappungsvolumen (25a-III, 25b-III) in dem Maße zunimmt, wie das andere Überlappungvolumen (25b-III, 25a-III) abnimmt, so dass das gesamte Volumen aus beiden Überlappungvolumina (25b-III, 25a-III) konstant bleibt.

2. Federeinrichtung nach Anspruch 1, **dadurch gekennzeichnet, dass** die Polkörper (2a, 2b, 3) und/oder die Pole einen kreisförmigen oder ringförmigen oder rechteckigen oder quadratischen Querschnitt aufweisen.

3. Federeinrichtung nach Anspruch 1 oder 2, **dadurch gekennzeichnet, dass** die Polkörper (2a, 2b, 3) und/oder die Pole unterschiedlich große Querschnitte oder Breiten aufweisen.

4. Federeinrichtung nach einem der Ansprüche 1 bis 2, **dadurch gekennzeichnet, dass** die Querschnitte oder Breiten der ersten und der dritten Polkörper zu den Querschnitten oder Breiten der zweiten Polkörper ein Verhältnis von im wesentlichen 100% bis 300% aufweisen.

5. Federeinrichtung nach Anspruch 4, **dadurch gekennzeichnet, dass** das Verhältnis 140% entspricht.

6. Federeinrichtung nach einem der vorhergehenden Ansprüchen, **dadurch gekennzeichnet, dass** die Polkörper (2a, 2b, 3) in der Federeinrichtung im wesentlichen entlang von aus den Polen austretenden Feldlinien (4) verschiebbar sind.

7. Federeinrichtung nach einem der vorhergehenden Ansprüchen, **dadurch gekennzeichnet, dass** die Federeinrichtung neben der ersten Polkörperkombination (1) eine zweite oder weitere Polkörperkombinationen umfasst, wobei die magnetische Flussrichtung durch die Polkörperkombinationen im wesentlichen parallel und/oder im wesentlichen antiparallel zueinander verlaufen.

8. Federeinrichtung nach Anspruch 7, **dadurch gekennzeichnet, dass** die magnetische Flussrichtung durch die Polkörperkominationen (1) im wesentlichen parallel zueinander verlaufen.

9. Federeinrichtung nach Anspruch 7, **dadurch gekennzeichnet, dass** die magnetische Flussrichtung benachbarter Polkörperkominationen (1a, 1b) im wesentlichen antiparallel zueinander verlaufen.

10. Federeinrichtung nach einem der vorhergehenden Ansprüche, **dadurch gekennzeichnet, dass** die Federeinrichtung wenigstens eine Polkörperkombination (2a, 2b, 3) umfasst, bei welcher die Polkörper Magnete und/oder magnetisierbare Körper beinhalten, wobei zumindest zwei Polkörper durch ein oder mehrere Magnete bereitzustellen sind.

11. Federeinrichtung nach einem der vorhergehenden Ansprüche, **dadurch gekennzeichnet, dass** die Federeinrichtung ein Joch oder mehrere Joche (8a, 8b) zum Erzeugen eines gebündelten magnetischen Kreises zwischen den Polkörpern umfasst.

12. Federeinrichtung nach einem der vorhergehenden Ansprüche, **dadurch gekennzeichnet, dass** die Polkörper (2a, 2b, 3) Permanentmagnete und/oder Elektromagnete umfassen.

13. Federeinrichtung nach einem der vorhergehenden Ansprüche, **dadurch gekennzeichnet, dass** die Polkörper (2a, 2b, 3) und/oder das Joch einen magnetisierbaren Stoff beinhalten, welcher eine relative Permeabilität µᵣ von mindestens 1 aufweist.

14. Federeinrichtung nach einem der vorhergehenden Ansprüche, **dadurch gekennzeichnet, dass** die magnetisierbaren Körper (2a, 2b, 3) und/oder das Joch (8a, 8b) Eisen und/oder Eisenlegierungen und/oder Keramiken und/oder Nicht-Eisen-Metalle und/oder entsprechende Legierungen beinhalten.

15. Federeinrichtung nach einem der vorhergehenden Ansprüche, **dadurch gekennzeichnet, dass** der Abstand zwischen dem ersten und dem dritten Polkörper (2a, 2b) einstellbar ist.

16. Federeinrichtung nach einem der vorhergehenden Ansprüche, **dadurch gekennzeichnet, dass** die Federeinrichtung ein Richtmittel (18) zum Einstellen des Abstandes (h) zwischen dem ersten und dem dritten Polkörper (2a, 2b umfasst.

17. Federeinrichtung nach Anspruch 1, 15 oder 16, **dadurch gekennzeichnet, dass** der Abstand (h) einen Wert zwischen 23mm bis 33mm umfasst.

18. Federeinrichtung nach Anspruch 17, **dadurch gekennzeichnet, dass** der Abstand (h) einen Wert von 28mm aufweist.

19. Federeinrichtung nach einem der vorhergehenden Ansprüche, **dadurch gekennzeichnet, dass** die Federeinrichtung Haltemittel (6) zum Halten der zweiten Polkörper (3) im Abstand (h) zwischen dem ersten und dem dritten Polkörper umfasst.

20. Federeinrichtung nach einem der vorhergehenden Ansprüche, **dadurch gekennzeichnet, dass** die Federeinrichtung Führungsmittel (21) zum Führen des zweiten Federkörpers (3) im Abstand (h) zwischen dem ersten und dem dritten Polkörper (2a, 2b) umfasst.

21. Federeinrichtung nach Anspruch 20, **dadurch gekennzeichnet, dass** das Führungsmittel (21) ein Federparallelogramm umfasst.

22. Federeinrichtung nach Anspruch 21, **dadurch gekennzeichnet, dass** das Federparallelogramm Blattfedern (14, 7) mit positiver Steifheit umfasst.

23. Federeinrichtung nach Anspruch 22, **dadurch gekennzeichnet, dass** die Blattfedern (14) gespleißt sind.

24. Federeinrichtung nach einem der vorhergehenden Ansprüche, **dadurch gekennzeichnet, dass** die Federeinrichtung Kopplungsmittel (9) zum An- und Entkoppeln der Federeinrichtung an eine Last umfasst.

25. Federeinrichtung nach Anspruch 24, **dadurch gekennzeichnet, dass** das Kopplungsmittel (9) einen Federdraht umfasst.

26. Federeinrichtung nach einem der vorhergehenden Ansprüchen, **dadurch gekennzeichnet, dass** die Federeinrichtung eine Klammereinrichtung (12) zur Befestigung der Federeinrichtung umfasst.

27. Federeinrichtung nach einem der vorhergehenden Ansprüchen, **dadurch gekennzeichnet, dass** die Federeinrichtung Abschirmmittel (15a, 15b) zum Abschirmen der internen Magnetfelder umfasst.

28. Federeinrichtung nach einem der vorhergehenden Ansprüche, **dadurch gekennzeichnet, dass** die Federeinrichtung in alle Raumrichtungen ausrichtbar ist.

29. Federeinrichtung nach einem der vorhergehenden Ansprüche, **dadurch gekennzeichnet, dass** die Federeinrichtung eine parallele und/oder serielle Zusammenschaltung von Polkörperkombinationen (2a, 2b, 3) umfasst.

30. Federeinrichtung nach einem der vorhergehenden Ansprüche, **dadurch gekennzeichnet, dass** die Federeinrichtung eine Steuer- und/oder Regeleinrichtung umfasst.

31. Federeinrichtung nach einem der vorhergehenden Ansprüche, **dadurch gekennzeichnet, dass** die Federeinrichtung wenigstens einen zweiten Federkörper umfasst, welcher eine mechanische und/oder pneumatische und/oder hydraulische und/oder elektromechanische Feder beinhaltet.

32. Schwingungsisolationseinrichtung zur passiven und/oder dynamischen Schwingungsisolation eines Isolationskörpers oder einer Last, insbesondere zur Vibrationsschingungsisolation, und insbesondere zur Schwingungsisolation schwingssensibler Vorrichtungen, **gekennzeichnet durch** wenigstens eine Federeinrichtung nach einem der vorhergehenden Ansprüche.

33. Schwingungsisolationseinrichtung nach Anspruch 32, **dadurch gekennzeichnet, dass** die Federeinrichtungen untereinander parallel und/oder seriell gekoppelt sind.

## Claims

1. Magnetic suspension device with negative stiffness, comprising at least one first combination of pole bodies with at least one first, at least one second and at least one third pole body (2a, 2b, 3), each having opposing magnetic poles, wherein the pole bodies are arranged in such a combination that unlike poles oppose each other and the first and the third pole body (2a, 2b) assume a defined distance (h) from each other in which the second pole member (3) is arranged, and at least two overlap volumes (25a - III, 25b - III) are formed between the poles wherein the pole bodies (2a, 2b, 3) are arranged so as to be movable relative to each other, **characterised in that** the second pole body (3) is moved relative to the other pole bodies (2a, 2b) in such a way that one of the overlap volumes (25a - III, 25b - III) increases to the same extent that the other overlap volume (25b - III, 25a - III) decreases, in such a way that the overall volume of the two overlap volumes (25b - III, 25a - III) remains constant.

2. Suspension device according to claim 1, **characterised in that** the pole bodies (2a, 2b, 3) and /or the poles have a circular or annular or rectangular or quadratic cross-section.

3. Suspension device according to claim 1 or 2, **characterised in that** the pole bodies (2a, 2b, 3) and /or the poles have cross-sections or widths which differ in size.

4. Suspension device according to one of the claims 1 to 2, **characterised in that** the cross-sections or widths of the first and the third pole bodies represent essentially 100 to 300% in relation to the cross-sections or widths of the second pole bodies.

5. Suspension device according to claim 4, **characterised in that** the relationship represents 140%.

6. Suspension device according to one of the preceding claims, **characterised in that** the pole bodies (2a, 2b, 3) in the suspension device can be displaced essentially along field lines (4) coming from the poles.

7. Suspension device according to one of the preceding claims, **characterised in that** the suspension device comprises, besides the first combination of pole bodies (1), a second or further combinations of pole bodies wherein the magnetic flux directions through the combinations of pole bodies run essentially parallel and / or essentially anti-parallel to each other.

8. Suspension device according to claim 7, **characterised in that** the magnetic flux directions through the combinations of pole bodies (1) run essentially parallel to each other.

9. Suspension device according to claim 7, **characterised in that** the magnetic flux directions of adjacent combinations of pole bodies (1a, 1b) run essentially parallel to each other.

10. Suspension device according to one of the preceding claims, **characterised in that** the suspension device comprises at least one combination of pole bodies (2a, 2b, 3) wherein the pole bodies contain magnets and / or magnetisable bodies wherein at least two pole bodies are to be provided through one or more magnets.

11. Suspension device according to one of the preceding claims, **characterised in that** the suspension device comprises a yoke or a plurality of yokes (8a, 8b) for generating a bundled magnetic circle between the pole bodies.

12. Suspension device according to one of the preceding claims, **characterised in that** the pole bodies (2a, 2b, 3) comprise permanent magnets and / or electro-magnets.

13. Suspension device according to one of the preceding claims, **characterised in that** the pole bodies (2a, 2b, 3) and / or the yoke contain a magnetisable material with a relative permeability µᵣ of at least 1.

14. Suspension device according to one of the preceding claims, **characterised in that** the magnetisable bodies (2a, 2b, 3) and / or the yoke (8a, 8b) contain iron and /or iron alloys and / or ceramic and / or non-iron metals and / or corresponding alloys.

15. Suspension device according to one of the preceding claims, **characterised in that** the distance between the first and the third pole body (2a, 2b) can be set.

16. Suspension device according to one of the preceding claims, **characterised in that** the suspension device comprises directing means (18) for setting the distance (h) between the first and the third pole body (2a, 2b).

17. Suspension device according to claim 1, 15 or 16, **characterised in that** the distance (h) represents a value of 23 mm to 33 mm.

18. Suspension device according to claim 17, **characterised in that** the distance (h) represents a value of 28 mm.

19. Suspension device according to one of the preceding claims, **characterised in that** the suspension device comprises holding means (6) for holding the second pole bodies (3) at a distance (h) between the first and the third pole body.

20. Suspension device according to one of the preceding claims, **characterised in that** the suspension device comprises guiding means (21) for guiding the second spring body (3) at a distance (h) between the first and the third pole body (2a, 2b).

21. Suspension device according to claim 20, **characterised in that** the guiding means (21) comprise a spring parallelogram.

22. Suspension device according to claim 21, **characterised in that** the spring parallelogram comprises leaf springs (14, 7) with positive stiffness.

23. Suspension device according to claim 22,
**characterised in that** the leaf springs (14) are spliced.

24. Suspension device according to one of the preceding claims, **characterised in that** the suspension device has connecting means (9) for connecting and disconnecting the suspension device to / from a load.

25. Suspension device according to claim 24, **characterised in that** the connecting means (9) comprise a spring wire.

26. Suspension device according to one of the preceding claims, **characterised in that** the suspension device (12) comprises a clamping device (12) for fixing the suspension device.

27. Suspension device according to one of the preceding claims, **characterised in that** the suspension device comprises shielding means (15a, 15b) for shielding the internal magnetic fields.

28. Suspension device according to one of the preceding claims, **characterised in that** the suspension device can be extended into all spatial directions.

29. Suspension device according to one of the preceding claims, **characterised in that** the suspension device comprises a parallel and / or serial arrangement of combinations of pole bodies (2a, 2b, 3).

30. Suspension device according to one of the preceding claims, **characterised in that** the suspension device comprises an open-loop and / or closed-loop control device.

31. Suspension device according to one of the preceding claims, **characterised in that** the suspension device comprises at least a second spring body which contains a mechanical and / or pneumatic and / or hydraulic and / or electro-mechanical spring.

32. Oscillation isolation device for passive and / or dynamic oscillation isolation of an isolation body or a load, particularly for vibration isolation, and particularly for oscillation isolation of oscillation-sensitive devices, **characterised by** at least one suspension device according to one of the preceding claims.

33. Oscillation isolation device according to claim 32, **characterised in that** the suspension devices are interconnected in parallel and / or in series.

## Revendications

1. Dispositif à ressort magnétique à rigidité négative, comportant : au moins une première combinaison de corps polaires constituée d'au moins un premier corps polaire, d'au moins un deuxième corps polaire et d'au moins un troisième corps polaire (2a, 2b, 3), qui comportent chacun des pôles magnétiques opposés, les corps polaires étant orientés dans la combinaison de telle sorte que des pôles de signe contraire soient situés les uns en face des autres, et que le premier et le troisième corps polaire (2a, 2b) aient entre eux un écartement (h) défini dans lequel est disposé le deuxième corps polaire (3), et qu'au moins deux volumes de chevauchement (25a-III, 25b-III) se forment entre les pôles, étant précisé que les corps polaires (2a, 2b, 3) sont disposés de façon à pouvoir se déplacer les uns par rapport aux autres, **caractérisé en ce que** le deuxième corps polaire (3) est déplacé par rapport aux autres corps polaires (2a, 2b) de telle sorte que l'un des volumes de chevauchement (25a-III, 25b-III) augmente proportionnellement à la diminution de l'autre volume de chevauchement (25b-III, 25a-III), de sorte que l'ensemble du volume des deux volumes de chevauchement (25b-III, 25a-III) reste constant.

2. Dispositif à ressort selon la revendication 1, **caractérisé en ce que** les corps polaires (2a, 2b, 3) et/ou les pôles ont une section transversale circulaire ou annulaire ou rectangulaire ou quadratique.

3. Dispositif à ressort selon la revendication 1 ou 2, **caractérisé en ce que** les corps polaires (2a, 2b, 3) et/ou les pôles ont des sections transversales ou des largeurs de différentes importances.

4. Dispositif à ressort selon l'une des revendications 1 ou 2, **caractérisé en ce que**, par rapport aux sections transversales ou aux largeurs des deuxièmes corps polaires, le rapport entre les sections transversales ou largeurs des premiers et des troisièmes corps polaires est sensiblement de 100 % à 300 %.

5. Dispositif à ressort selon la revendication 4, **caractérisé en ce que** le rapport correspond à 140 %.

6. Dispositif à ressort selon l'une des revendications précédentes, **caractérisé en ce que** dans le dispositif à ressort, les corps polaires (2a, 2b, 3) peuvent pour l'essentiel être déplacés le long de lignes de champ (4) sortant des pôles.

7. Dispositif à ressort selon l'une des revendications précédentes, **caractérisé en ce que**, outre la première combinaison (1) de corps polaires, le dispositif à ressort comporte une deuxième ou d'autres combinaisons de corps polaires, le sens du flux magnétique passant par les combinaisons de corps polaires étant sensiblement parallèle et/ou sensiblement antiparallèle.

8. Dispositif à ressort selon la revendication 7, **caractérisé en ce que** le sens du flux magnétique passant par les combinaisons (1) de corps polaires est sensiblement parallèle.

9. Dispositif à ressort selon la revendication 7, **caractérisé en ce que** le sens du flux magnétique de combinaisons (1a, 1b) adjacentes de corps polaires est sensiblement antiparallèle.

10. Dispositif à ressort selon l'une des revendications précédentes, **caractérisé en ce que** le dispositif à ressort comporte au moins une combinaison de corps polaires (2a, 2b, 3), dans laquelle les corps polaires contiennent des aimants et/ou des corps magnétisables, au moins deux corps polaires étant à mettre à disposition par un ou plusieurs aimants.

11. Dispositif à ressort selon l'une des revendications précédentes, **caractérisé en ce que** le dispositif à ressort comporte une culasse ou plusieurs culasses (8a, 8b) pour la génération d'un circuit magnétique focalisé entre les corps polaires.

12. Dispositif à ressort selon l'une des revendications précédentes, **caractérisé en ce que** les corps polaires (2a, 2b, 3) comportent des aimants permanents et/ou des électroaimants.

13. Dispositif à ressort selon l'une des revendications précédentes, **caractérisé en ce que** les corps polaires (2a, 2b, 3) et/ou la culasse contiennent une substance magnétisable d'une perméabilité relative µᵣ d'au moins 1.

14. Dispositif à ressort selon l'une des revendications précédentes, **caractérisé en ce que** les corps magnétisables (2a, 2b, 3) et/ou la culasse (8a, 8b) contiennent du fer et/ou des alliages de fer et/ou des céramiques et/ou des métaux non ferreux et/ou des alliages correspondants.

15. Dispositif à ressort selon l'une des revendications précédentes, **caractérisé en ce que** l'écartement entre le premier et le troisième corps polaire (2a, 2b) est réglable.

16. Dispositif à ressort selon l'une des revendications précédentes, **caractérisé en ce que** le dispositif à ressort comporte un moyen d'ajustement (18) pour le réglage de l'écartement (h) entre le premier et le troisième corps polaire (2a, 2b).

17. Dispositif à ressort selon la revendication 1, 15 ou 16, **caractérisé en ce que** l'écartement (h) correspond à une valeur comprise entre 23 mm et 33 mm.

18. Dispositif à ressort selon la revendication 17, **caractérisé en ce que** l'écartement (h) correspond à une valeur de 28 mm.

19. Dispositif à ressort selon l'une des revendications précédentes, **caractérisé en ce que** le dispositif à ressort comporte des moyens de retenue (6) pour retenir le deuxième corps polaire (3) à un écartement (h) entre le premier et le troisième corps polaire.

20. Dispositif à ressort selon l'une des revendications précédentes, **caractérisé en ce que** le dispositif à ressort comporte des moyens de guidage (21) pour guider le deuxième corps polaire (3) à un écartement (h) entre le premier et le troisième corps polaire (2a, 2b).

21. Dispositif à ressort selon la revendication 20, **caractérisé en ce que** le moyen de guidage (21) comporte un parallélogramme à ressorts.

22. Dispositif à ressort selon la revendication 21, **caractérisé en ce que** le parallélogramme à ressorts comporte des ressorts à lame (14, 7) à rigidité positive.

23. Dispositif à ressort selon la revendication 22, **caractérisé en ce que** les ressorts à lame (14) sont épissés.

24. Dispositif à ressort selon l'une des revendications précédentes, **caractérisé en ce que** le dispositif à ressort comporte des moyens de couplage (9) pour coupler le dispositif à ressort à une charge et pour le découpler de celle-ci.

25. Dispositif à ressort selon la revendication 24, **caractérisé en ce que** le moyen de couplage (9) comporte un fil d'acier à ressort.

26. Dispositif à ressort selon l'une des revendications précédentes, **caractérisé en ce que** le dispositif à ressort comporte un dispositif d'agrafage (12) pour la fixation du dispositif à ressort.

27. Dispositif à ressort selon l'une des revendications précédentes, **caractérisé en ce que** le dispositif à ressort comporte des moyens de blindage (15a, 15b) pour le blindage des champs magnétiques internes.

28. Dispositif à ressort selon l'une des revendications précédentes, **caractérisé en ce que** le dispositif à ressort peut être orienté dans toutes les directions spatiales.

29. Dispositif à ressort selon l'une des revendications précédentes, **caractérisé en ce que** le dispositif à ressort comporte une interconnexion en parallèle et/ou en série de combinaisons de corps polaires (2a, 2b, 3).

30. Dispositif à ressort selon l'une des revendications précédentes, **caractérisé en ce que** le dispositif à ressort comporte un dispositif de commande et/ou de régulation.

31. Dispositif à ressort selon l'une des revendications précédentes, **caractérisé en ce que** le dispositif à ressort comporte au moins un deuxième corps de ressort, contenant un ressort mécanique et/ou pneumatique et/ou hydraulique et/ou électromécanique.

32. Dispositif d'isolation oscillatoire destiné à l'isolation oscillatoire passive et/ou dynamique d'un corps d'isolation ou d'une charge, notamment à l'isolation oscillatoire de vibrations, et notamment à l'isolation oscillatoire de dispositifs sensibles aux oscillations, **caractérisé par** au moins un dispositif à ressort selon l'une des revendications précédentes.

33. Dispositif d'isolation oscillatoire selon la revendication 32, **caractérisé en ce que** les dispositifs à ressort sont couplés entre eux en parallèle et/ou en série.
